(19) Europäisches Patentamt
European Patent Office
Office européen des brevets

(11) Veröffentlichungsnummer: **0 530 520 A1**

(12) # EUROPÄISCHE PATENTANMELDUNG

(21) Anmeldenummer: **92113312.0**

(22) Anmeldetag: **05.08.92**

(51) Int. Cl.5: **C08L 77/02**, C08L 77/06, //(C08L77/02,67:02),(C08L77/06, 67:02)

(30) Priorität: **22.08.91 DE 4127720**

(43) Veröffentlichungstag der Anmeldung: **10.03.93 Patentblatt 93/10**

(84) Benannte Vertragsstaaten: **AT BE CH DE ES FR GB LI NL SE**

(71) Anmelder: **BASF Aktiengesellschaft**
**Carl-Bosch-Strasse 38**
**W-6700 Ludwigshafen(DE)**

(72) Erfinder: **Goetz, Walter, Dr.**
**Dhauner Strasse 79**
**W-6700 Ludwigshafen(DE)**
Erfinder: **Laun, Martin, Dr.**
**Duererstrasse 22**
**W-6700 Ludwigshafen(DE)**
Erfinder: **Heckmann, Walter, Dr.**
**Geiersbergstrasse 2**
**W-6940 Weinheim(DE)**
Erfinder: **Betz, Walter, Dr.**
**Weimarer Strasse 45**
**W-6700 Ludwigshafen(DE)**

(54) **Fliessfähige thermoplastische Formmassen.**

(57) Die Erfindung betrifft fließfähige thermoplastische Formmassen, enthaltend

A) 40 - 99,5 Gew.-% eines thermoplastischen Polyamids mit einer Viskositätszahl VZ von 100 bis 400 ml/g und

B) 0,5 - 10 Gew.-% eines niedermolekularen thermoplastischen Polyesters mit einer Viskositätszahl VZ von 30 bis 100 ml/g

mit der Maßgabe, daß $VZ_{(A)} - VZ_{(B)} \geq 30$ ist,
sowie darüber hinaus

C) 0 - 50 Gew.-% eines faser- oder teilchenförmigen Füllstoffes oder deren Mischungen

D) 0 - 40 Gew.-% eines kautschukelastischen Polymerisates

E) 0 - 30 Gew.-% üblicher Zusatzstoffe in wirksamen Mengen.

EP 0 530 520 A1

Die Erfindung betrifft fließfähige thermoplastische Formmassen, enthaltend

A) 40 - 99,5 Gew.-% eines thermoplastischen Polyamids mit einer Viskositätszahl VZ von 100 bis 400 ml/g und

B) 0,5 - 10 Gew.-% eines niedermolekularen thermoplastischen Polyesters mit einer Viskositätszahl VZ von 30 bis 100 ml/g

mit der Maßgabe, daß $VZ_{(A)} - VZ_{(B)} \geqq 30$ ist,
sowie darüber hinaus

c) 0 - 50 Gew.-% eines faser- oder teilchenförmigen Füllstoffes oder deren Mischungen

D) 0 - 40 Gew.-% eines kautschukelastischen Polymerisates

E) 0 - 30 Gew.-% übliche Zusatzstoffe in wirksamen Mengen.

Weiterhin betrifft die Erfindung die Verwendung derartiger Formmassen zur Herstellung von Fasern, Folien und Formkörpern sowie die aus den erfindungsgemäßen Formmassen erhältlichen Formkörper.

Polyamide werden in vielen Bereichen verwendet, z.B. im Automobilbereich, zur Herstellung von Gehäusen für Elektrogeräte oder auf dem Bausektor.
Die problemlose Verarbeitung zu vielen verschieden geformten Formkörpern, die je nach Anwendung unterschiedliche Zusätze enthalten können, spielt hierbei eine wesentliche Rolle.

Dabei sollten kurze Zykluszeiten, die keine nachteiligen Auswirkungen auf die hergestellten Formteile haben sowie möglichst einheitliche Verarbeitungsparameter unabhängig von der Art der Zusatzstoffe erstrebenswert sein.

Für eine verbesserte Fließfähigkeit des Polyamids ist ein niederes Molekulargewicht nicht wünschenswert, da diese Maßnahme zu einer erheblichen Verschlechterung der Zähigkeit des Polyamids führt.

Aus der EP-A 270 000 sind Mischungen aus Polyamiden und Polyestern bekannt, die einen speziellen Kautschuk zur Verbesserung der Schlagzähigkeit enthalten.

Die Mischungsverhältnisse der beiden Polymerphasen sind nahezu beliebig, wobei die Polyesterkomponente übliche Viskositätszahlen aufweist. Die Verarbeitbarkeit zu Formkörpern ist verbesserungswürdig.

Aus der EP-A 331 001 sind Mischungen aus Polyamiden und Copolyetherestern bekannt.

Flüssigkristalline Polyester in Abmischung mit Polyamiden sind u.a. aus der EP-A 30 417 bekannt.

Diese Formmassen wiesen im Vergleich zu Formmassen, die ausschließlich Polyamide enthalten, zwar eine bessere Verarbeitbarkeit auf, zeigen jedoch ungenügende Anisotropieeigenschaften (Festigkeit und Steifigkeit längs und quer zur Fließrichtung sind verschieden).

Weiterhin sind die Zähigkeitseigenschaften nicht ausreichend, da in einigen Anwendungsbereichen eine möglichst große plastische Verformung vor endgültigem Bruch des Formteils gefordert wird.

Der vorliegenden Erfindung lag daher die Aufgabe zugrunde, leichtfließende Polyamidpolyesterformmassen zur Verfügung zu stellen, die eine verbesserte Verarbeitung zu Formkörpern ermöglichen. Dabei sollten insbesondere eine verringerte Zykluszeit und weitestgehend gleiche Verarbeitungsparameter - unabhängig von Menge und Art der Zusatzstoffe - eine verbesserte Verarbeitung ermöglichen, wobei die herstellbaren Formkörper verbesserte Zähigkeitseigenschaften aufweisen.

Demgemäß wurden die eingangs definierten fließfähigen thermoplastischen Formmassen gefunden. Bevorzugte Formmassen dieser Art und deren Verwendung sind den Unteransprüchen zu entnehmen.

Als Komponente A) enthalten die erfindungsgemäßen Formmassen 40 - 99,5, bevorzugt 50 - 99 und insbesondere 60 - 99 Gew.-% eines thermoplastischen Polyamids mit einer Viskositätszahl VZ von 100 bis 400, bevorzugt 120 - 250 und insbesondere 130 - 200 ml/g.

Die Viskositätszahl ist ein Maß für das mittlere Molekulargewicht (Gewichtsmittel) $\overline{M}_w$ des Polyamids und wird im allgemeinen nach ISO 307 an 0,5 gew.-%igen Lösungen des Polyamids in 96 gew.-%iger Schwefelsäure bei 25 °C bestimmt.

Die als Komponente A) verwendeten Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polymerisation von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam (Nylon 6), Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin (Polyamid 66/6T) oder Copolymere aus Caprolactam, Terephthalsäure und Hexamethylendiamin (Polyamid 6/6T). Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 20 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von $\epsilon$-Caprolactam ableiten und/oder Einheiten, die sich von Adipinsäure und Hexamethylendiamin ableiten.

Der Anteil an Einheiten die sich von e-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von e-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von $\epsilon$-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von e-Caprolactam ableiten, erwiesen. Als besonders vorteilhaft für ternäre Copolyamide haben sich Zusammensetzungen aus 50 bis 70 Gew.-% Einheiten, die sich von Terephthalsäure und Hexamethylendiamin und 10 bis 20 Gew.-% Einheiten die sich von Adipinsäure und Hexamethylendiamin ableiten sowie 20 bis 30 Gew.-% Einheiten, die sich von Isophthalsäure und Hexamethylendiamin ableiten, erwiesen.

Die Herstellung der teilaromatischen Copolyamide kann z.B. nach dem in den EP-A-129 195 und EP 129 196 beschriebenen Verfahren erfolgen.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Als Komponente B) enthalten die erfindungsgemäßen Formmassen 2 bis 97,5 Gew.-%, insbesondere 0,5 bis 10, bevorzugt 1 - 5 und insbesondere 1 - 3 Gew.-% eines niedermolekularen Polyesters mit einer Viskositätszahl von 30 bis 100, bevorzugt 40 - 80 und insbesondere 50 bis 70 ml/g.

Die Viskositätszahl der Polyester wird im allgemeinen nach DIN 53728 bestimmt an 0,5 gew.-%igen Lösungen des Polyesters in einer 1:1 Mischung Phenol/o-Dichlorbenzol bei 23 °C.

Derartige Polyester B) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$- bis $C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Ester oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$- bis $C_6$-Diolkomponente, z.B. Polyethylenterephthalat, Polyethylennaphthalat, Polypropylenterephthalat oder Polybutylenterephthalat oder deren Mischungen werden besonders bevorzugt.

In der Regel eignen sich alle vorstehend aufgeführten Polyester, die im Unterschied zu den Polyamiden A) jedoch ein weitaus niedrigeres Molekulargewicht aufweisen. Die Differenz der Viskositätszahlen $VZ_{(A)}$ - $VZ_{(B)}$ beträgt vorzugsweise 30 bis 150 ml/g, insbesondere 50 bis 120 ml/g. Bevorzugt werden Formmassen, die keine flüssigkristallinen Polyester enthalten.

Die erfindungsgemäßen Formmassen können 0 bis 50 Gew.-%, bevorzugt 10 - 40 und insbesondere 15 bis 35 Gew.-%, eines faser- oder teilchenförmigen Zusatzstoffes oder Mischungen solcher Füllstoffe enthalten.

Als faserförmige Füllstoffe C) seien hier nur beispielsweise Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6 bis 20 mm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calcium-carbonat, Glimmer, Magnesiumcarbonat (Kreide) und Titandioxid genannt, wovon Wollastonit, Titandioxid und Kaolin im allgemeinen bevorzugt werden.

Als Komponente D) enthalten die erfindungsgemäßen thermoplastischen Form-massen 0 bis 40, vorzugsweise 10 bis 25 Gew.-%, eines kautschukelastischen Polymerisats.

Im allgemeinen handelt es sich dabei um Copolymerisate, die bevorzugt aus mindestens zwei der folgenden Monomeren als Hauptkomponenten aufgebaut sind: Ethylen, Propylen, Isobuten, Isopren, Chloropren, Vinylacetat, Styrol, Acrylnitril und Acryl- und Methacrylsäureestern mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen (EPM) bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI + 4/100oC) solcher unvernetzten EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln II oder III oder IV oder V zum Monomerengemisch in den Kautschuk eingebaut

$$R^1C(COOR^2) = C(COOR^3)R^4 \qquad II$$

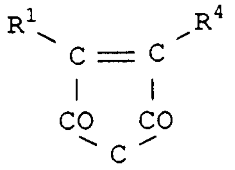

III

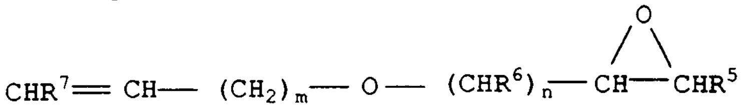

IV

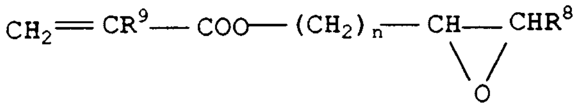

V

wobei R1 bis R9 Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste R1 bis R7 Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln II, III und V sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.-%, und der Anteil an Methacrylsäureestern zwischen 2 und 50 Gew.-%. Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus

| | |
|---|---|
| 50 bis 98,9, | insbesondere 60 bis 95 Gew.-% Ethylen, |
| 0,1 bis 40, | insbesondere 0,3 bis 20 Gew.-% Glycidylacrylat und/oder Glycidylmethacrylat, Acrylsäure und/oder Maleinsäureanhydrid, und |
| 1 bis 45, | insbesondere 10 bis 35 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190 °C und 2,16 kg Belastung).

Bevorzugte Elastomere D) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 ° C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20oC) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

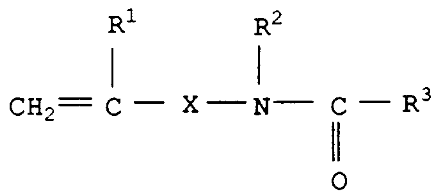

eingeführt werden können,
wobei die Substituenten folgende Bedeutung haben können:

- $R^1$ Wasserstoff oder eine $C_1$- bis $C_4$-Alkylgruppe,
- $R^2$ Wasserstoff, eine $C_1$- bis $C_8$-Alkylgruppe oder eine Arylgruppe,insbesondere Phenyl,
- $R^3$ Wasserstoff, eine $C_1$- bis $C_{10}$-Alkyl-, eine $C_6$-$C_{12}$-Arylgruppe oder -$OR^4$,
- $R^4$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$- bis $C_{12}$-Arylengruppe oder

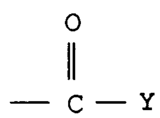

- Y O-Z- oder NH-Z und
- Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Divinylbenzol, Diallylphthalat und Dihydrodicyclopentodienylacrylat sowie die in der EP-A 50 265 beschriebenen Verbindungen zu nennen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigtenCarbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | Isopren, n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat und einer äußeren Hülle aus den vorstehend genannten Copolymeren und Copolymere von Ethylen mit Comonomeren, die reaktive Gruppen liefern.

Die beschriebenen Elastomere D) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden können.

Neben den wesentlichen Komponenten A) und B) sowie gegebenenfalls C) und D) können die erfindungsgemäßen Formmassen übliche Zusatzstoffe und Verarbeitungshilfsmittel E) enthalten. Deren Anteil beträgt im allgemeinen bis zu 30, vorzugsweise bis zu 10 Gew.-%, bezogen auf das Gesamtgewicht der Komponenten A) bis E).

Übliche Zusatzstoffe sind beispielsweise UV-Stabilisatoren, Gleit- und Entformungsmittel, Färbemittel, Farbstoffe und Pigmente und Weichmacher sowie Flammschutzmittel.

Beispiele für UV-Stabilisatoren sind verschiedene substituierte Resorcine, Salicylate, Benzotriazole und Benzophenone, die im allgemeinen in Mengen bis zu 2,0 Gew.-% eingesetzt werden.

Gleit- und Entformungsmittel, die in der Regel in Mengen bis zu 1 Gew.-% der thermoplastischen Masse zugesetzt werden, sind Stearinsäuren, Stearylalkohol, Stearinsäurealkylester und -amide sowie Ester des Pentaerythrits mit langkettigen Fettsäuren.

Flammschutzmittel können im allgemeinen in Mengen bis zu 20 Gew.-% in den Formmassen enthalten sein. Es kommen hierbei alle für Polyamid bekannten Flammschutzzusätze in Betracht, bevorzugt ist jedoch elementarer roter oder schwarzer Phosphor.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 260 bis 350 ° C, vorzugsweise von 280 bis 340 ° C.

Die erfindungsgemäßen Formmassen zeichnen sich gegenüber entsprechenden Formmassen auf der Basis von Polyamiden und Polyestern üblicher Molekulargewichte insbesondere durch eine gute Fließfähigkeit bei der Verarbeitung aus. Die Verarbeitung ist weitestgehend unabhängig von Art und Menge der Zusatzstoffe. Darüber hinaus sind geringe Zykluszeiten zur Herstellung der Formteile erforderlich. Die herstellbaren Formkörper zeigen weiterhin eine verbesserte Zähigkeit, da eine größere plastische Deformation vor endgültigem Bruch erfolgt.

Aufgrund dieses Eigenschaftsspektrums eignen sich die erfindungsgemäßen Formmassen insbesondere zur Herstellung von Formkörpern, die im Kraftfahrzeugbereich verwendet werden.

## Beispiele

Es wurden folgende Komponenten eingesetzt:

### Komponente A

- A/1: Polyamid 6,6 (Polyhexamethylenadipinsäureamid) mit einer Viskositätszahl VZ von 149 ml/g; bestimmt nach ISO 307 an 0,5 gew.-%igen Lösungen in 96 gew.-%iger $H_2SO_4$ bei 23°C (Ultramid® A3 der BASF AG)
- A/2: Polyamid-6 (Poly-$\epsilon$-caprolactam) mit einer VZ von 145 ml/g; bestimmt nach ISO 307) (Ultramid® B3 der BASF AG)

### Komponente B

- B/1: Polybutylenterephthalat mit einem mittleren Molekulargewicht (Gewichtsmittelwert) von 5000; VZ = 54 ml/g; bestimmt nach DIN 53 728, in 0,5 gew.-%igen Lösungen in Phenol/o-Dichlorbenzol (1:1) bei 23°C
- B/2: Polybutylenterephthalat mit einem mittleren Molekulargewicht von 12 500; VZ = 83 ml/g
- B/V: Polybutylenterephthalat mit einem mittleren Molekulargewicht von 25 000; VZ = 125 ml/g (Ultradur® B 2550 der BASF AG)

### Herstellung der Formmassen

Die Komponenten A) und B) wurden auf einem Zweischneckenextruder bei 280°C (25 kg/h Durchsatz, 250 U/min) konfektioniert, verstrangt, granuliert und getrocknet.

Auf einer Spritzgießmaschine wurden bei 280°C Probekörper hergestellt.

Die Durchstoßarbeit wurde nach DIN 53443 an Rundscheiben (60 x 2 mm) bestimmt.

Die Schmelzviskosität wurde in Abhängigkeit vom Schergefälle (bei 280°C) am Granulat mit einem Hochdruckkapillarviskosimeter bestimmt, wobei das Granulat < 0,01 % Restfeuchtigkeit aufwies.

Als Meßgröße wurde die Schmelzviskosität angegeben, die bei einem für die Extruderverarbeitung typischen Schergefälle von 1000 $s^{-1}$ bestimmt wurde.

Die Zykluszeit wurde anhand der Methode am Testwerkzeug S 13 (Staubsaugerdeckel) bestimmt.

Hierzu wurde unter einheitlichen Bedingungen: Massetemperatur 290°C, Werkzeugoberflächentemperatur 65°C, Nachdruck 285 bar) für die verschiedenen Zusammensetzungen die kürzeste Zykluszeit ermittelt. Zur Vermeidung von Formkleben, das zu einer Verfälschung der Meßwerte führt, wurde das Granulat vorher mit 0,1 % Calciumstearat versehen, welches auf das ca. 100°C heiße Granulat aufgetrommelt wurde.

Die Ergebnisse der Messungen und die Zusammensetzung der Formmassen sind der Tabelle zu entnehmen.

Tabelle

| Beispiele | Zusammensetzung [Gew.-%] | Schmelzviskosität bei 1000 $s^{-1}$ [Pa·s] | Zykluszeit [sec] | Durchstoßarbeit [Nm] |
|---|---|---|---|---|
| 1* | 100 A/1 | 102 | 40 | 95 |
| 2* | 100 B/1 | 7 | | |
| 3* | 100 B/2 | 62 | | |
| 4* | 100 B/V | 105 | | |
| 5 | 99,5 A/1 + 0,5 B/1 | 86 | 33 | 88 |
| 6 | 99 A/1 + 1 B/1 | 78 | 28 | 68 |
| 7 | 98 A/1 + 2 B/1 | 79 | 26 | 79 |
| 8 | 96 A/1 + 4 B/1 | 75 | 26 | 60 |
| 9 | 90 A/1 + 10 B/1 | 71 | 24 | 24 |
| 10 | 98 A/1 + 2 B/2 | 95 | 34 | 68 |
| 11 | 92 A/1 + 8 B/2 | 90 | 30 | 74 |
| 12* | 98 A/1 + 2 B/V | 105 | 40 | 82 |
| 13* | 92 A/1 + 2 B/V | 100 | 42 | 64 |
| 14 | 98 A/2 + 2 B/1 | 65 | 32** | 120 |
| 15* | 98 A/2 + 2 B/V | 99 | 48** | 95 |

*) zum Vergleich
**) bei 270 °C

## Patentansprüche

**1.** Fließfähige thermoplastische Formmassen, enthaltend
A) 40 - 99,5 Gew.-% eines thermoplastischen Polyamids mit einer Viskositätszahl VZ von 100 bis 400 ml/g und
B) 0,5 - 10 Gew.-% eines niedermolekularen thermoplastischen Polyesters mit einer Viskositätszahl VZ von 30 bis 100 ml/g
mit der Maßgabe, daß $VZ_{(A)} - VZ_{(B)} \geqq 30$ ist,

sowie darüber hinaus
C) 0 - 50 Gew.-% eines faser- oder teilchenförmigen Füllstoffes oder deren Mischungen
D) 0 - 40 Gew.-% eines kautschukelastischen Polymerisates
E) 0 - 30 Gew.-% üblicher Zusatzstoffe in wirksamen Mengen.

**2.** Fließfähige thermoplastische Formmassen nach Anspruch 1, enthaltend
A) 50 - 99 Gew.-%
B) 1 - 5 Gew.-%.

**3.** Fließfähige thermoplastische Formmassen nach den Ansprüchen 1 oder 2, in denen die Komponente B) eine Viskositätszahl VZ von 40 bis 80 ml/g aufweist.

**4.** Fließfähige thermoplastische Formmassen nach den Ansprüchen 1 bis 3, in denen das Polyamid A) eine Viskositätszahl VZ von 120 bis 250 ml/g aufweist.

**5.** Fließfähige thermoplastische Formmassen nach den Ansprüchen 1 bis 4, in denen $VZ_{(A)} - VZ_{(B)} \geqq 50$ ist.

**6.** Fließfähige thermoplastische Formmassen nach den Ansprüchen 1 bis 5, enthaltend
   A) 60 - 89 Gew.-%
   B) 1 - 3 Gew.-%.
   C) 10 - 40 Gew.-%.

**7.** Fließfähige thermoplastische Formmassen nach den Ansprüchen 1 bis 6, in denen die Komponente B) aus Polyethylenterephthalat oder Polybutylenterephthalat oder deren Mischungen besteht.

**8.** Fließfähige thermoplastische Formmassen nach den Ansprüchen 1 bis 7, in denen die Komponente A) aus Polyhexamethylenadipinsäureamid oder Polycaprolactam oder aus einem teilaromatischen teilkristallinen Copolyamid oder deren Mischungen aufgebaut ist.

**9.** Verwendung der fließfähigen thermoplastischen Formmassen gemäß den Ansprüchen 1 bis 8 zur Herstellung von Fasern, Folien und Formkörpern.

**10.** Formkörper, hergestellt aus fließfähigen thermoplastischen Formmassen gemäß den Ansprüchen 1 bis 8.

Europäisches Patentamt

# EUROPÄISCHER RECHERCHENBERICHT

Nummer der Anmeldung

EP 92 11 3312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 270 000 (BASF)<br>--- | | C 08 L 77/02<br>C 08 L 77/06 //<br>(C 08 L 77/02<br>C 08 L 67:02 )<br>(C 08 L 77/06<br>C 08 L 67:02 ) |
| A | EP-A-0 294 062 (UBE)<br>--- | | |
| A | EP-A-0 044 141 (ICI)<br>--- | | |
| A | EP-A-0 177 010 (BASF)<br>--- | | |
| A | US-A-4 229 340 (M.L. DRUIN et al.)<br>----- | | |
| | | | RECHERCHIERTE SACHGEBIETE (Int. Cl.5) |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 22-09-1992 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)